# EUROPÄISCHE PATENTSCHRIFT

(11) **EP 3 305 141 B1**
(45) Veröffentlichungstag und Bekanntmachung des Hinweises auf die Patenterteilung: **20.02.2019**
(21) Anmeldenummer: 17190275.2
(22) Anmeldetag: 11.09.2017
(51) Int. Cl.: A47J 31/42

(54) **KAFFEEVOLLAUTOMAT**
AUTOMATIC COFFEE MACHINE
MACHINE À CAFÉ AUTOMATIQUE

(30) Priorität: 07.10.2016 DE 102016119020
(43) Veröffentlichungstag der Anmeldung: 11.04.2018
(73) Patentinhaber: Miele & Cie. KG, 33332 Gütersloh (DE); Eugster/Frismag AG, 8580 Amriswil (CH)
(72) Erfinder: Wüstefeld, Michael, 59555 Lippstadt (DE); Pötter, Berthold, 33332 Gütersloh (DE); Roth, Alain, 8593 Kesswil (CH)

(56) Entgegenhaltungen:
- EP-A1- 2 878 240
- WO-A1-2004/098361

## Beschreibung

Die Erfindung betrifft einen Kaffeevollautomaten nach den Oberbegriffen der unabhängigen Patentansprüche 1 und 8.

Derartige Kaffeevollautomaten können sowohl als Einbaugerät ausgeführt sein, als auch im Sinne eines freistehenden Einzelgerätes. Von Bedeutung ist hierbei lediglich, dass ein die erforderlichen Einbauten zum Betrieb des Kaffeevollautomaten aufnehmender Innenraum vorhanden ist, der zumindest einen Bohnenbehälter zur Aufnahme von Kaffeebohnen oder in Einzelfällen auch von Kaffeepulver aufweist, um daraus ein Kaffeegetränk zubereiten zu können. Der Innenraum wird durch eine Tür verschlossen, die dabei einen mechanischen sowie einen Sichtschutz bildet und in der Regel ästhetisch ansprechend gestaltet ist. Bei der Tür kann es sich jedoch im einfachsten Fall auch um die Tür eines den Kaffeevollautomaten aufnehmenden Küchenschrankes handeln. Normalerweise weist der Kaffeevollautomat allerdings selbst eine um Scharniere schwenkbare Tür auf. Da in Kaffeevollautomaten zumeist frische Kaffeebohnen verarbeitet werden, um eine maximale Geschmacksausbeute zu erreichen, ist in dem Innenraum ferner ein Mahlwerk vorhanden, das sich im Betriebszustand des Kaffeevollautomaten und in Fallrichtung der Bohnen betrachtet, unterhalb des Bohnenbehälters befindet. Die in dem Mahlwerk zu Kaffeepulver zermahlen Kaffeebohnen werden anschließend in einer dem Mahlwerk nachgeordneten Brüheinheit aufgebrüht, so dass abschließend über wenigstens eine Ausgabeeinrichtung das in dem Kaffeevollautomaten zubereitete Getränk entnommen werden kann. Dabei ist es bekannt, derartige Kaffeevollautomaten auch mit einem Vorratsbehälter auszustatten, in dem Milch aufbewahrt wird, die dem Kaffeegetränk beispielsweise in erwärmter Form oder aufgeschäumt hinzugefügt werden kann. Natürlich bieten moderne Kaffeevollautomaten auch die Möglichkeit, aus der Milch unmittelbar Milchgetränke zuzubereiten, was jedoch vorliegend nicht von maßgeblicher Bedeutung ist.

Ein ganz wesentlicher Aspekt der vorliegenden Erfindung ist jedoch bereits darin zu sehen, dass zumindest die Ausgabeeinrichtung nicht mehr, wie bei bisher bekannten Ausführungen derartiger Kaffeevollautomaten, in die Tür integriert ist. Durch das damit einhergehende Gewicht musste die Tür bislang nämlich sehr massiv ausgeführt und dementsprechend auch im Bereich der Aufhängung, also der Scharniere, überdimensioniert werden. Erschwerend kam bislang hinzu, dass häufig auch der Vorratsbehälter für Milch in die in der Tür vorhandene Vertiefung oder Mulde eingehängt wurde, was die erwähnten Schwierigkeiten zusätzlich verstärkte. Nunmehr ist ein vollkommen neuer Weg beschritten worden, der darin besteht, die erwähnten Bauelemente unmittelbar in den Innenraum des Kaffeevollautomaten zu integrieren. Dieser weist hierfür in an sich bekannter Weise und hauptsächlich aus ästhetischen Gründen ebenfalls eine Vertiefung oder Mulde auf, in der die Brüheinheit, die Ausgabeeinrichtung und gegebenenfalls auch der Vorratsbehälter für die Milch aufgenommen sind, während in der Tür hierfür lediglich eine Durchlassöffnung entsprechender Größe vorhanden ist. Damit wird es erstmals möglich, die Tür flach beziehungsweise baulich klein zu halten, was den Aufbau des Kaffeevollautomaten insgesamt erheblich vereinfacht und zudem einen größeren gestalterischen Spielraum mit sich bringt. Ein weiteres, bislang bestehendes Problem kann mit einer derartigen Ausführung ebenfalls beseitigt werden. Dieses bestand nämlich in den Leitungsübergängen zwischen der bewegbaren Tür und den im Kaffeevollautomaten vorhandenen Fluidleitungen beziehungsweise Anschlussaggregaten. Mit der neuen Lösung können aufwändige Dichtungen in diesen Abschnitten nahezu vollständig vermieden werden, was wiederum eine wesentliche Verbesserung und Vereinfachung eines derartigen Kaffeevollautomaten bedeutet.

Aus der DE 10 2014 100 333 A1 ist ganz allgemein ein Kaffeevollautomat bekannt, der einen Bohnenbehälter umfasst, welcher mehrere Kammern aufweist, in die unterschiedliche Kaffeesorten eingebracht werden können, um dadurch die Möglichkeit zu schaffen, durch eine gezielte Auswahl der entsprechenden Kaffeebohnen unterschiedliche Kaffeegetränke zubereiten zu können. Hierzu ist der Bohnenbehälter mit einem Gleitschieber gekoppelt, der zum Öffnen der verschiedenen Kammern mindestens eine mit der jeweiligen Öffnung in Überdeckung bringbare Auslassöffnung aufweist.

Die DE 20 2011 005 003 U1 beschreibt darüber hinaus einen Zweikammerbohnenbehälter für einen Kaffeevollautomaten, bei dem beide Kammern einen gemeinsamen Behälterauslauf aufweisen. Die Kammern verfügen über je einen Verschluss, so dass durch wahlweises Öffnen der Verschlüsse je eine Kammer angewählt werden kann und aus dieser die entsprechenden Bohnen für die Zubereitung des gewünschten Kaffeegetränkes entnommen werden können. Als Verschlusselement der Kammern dient dabei eine Transportschnecke die durch eine Drehbewegung in die eine oder andere Richtung jeweils die Kaffeebohnen aus einer der Kammern des Zweikammerbohnenbehälters zu dem Behälterauslauf transportiert, so dass diese in das nachfolgende Mahlwerk überführt werden können.

Die WO 2004/098361 A1 offenbart einen Kaffeevollautomaten mit einem Innenraum, umfassend einen Bohnenbehälter in dem Innenraum, ein Mahlwerk, das sich im Betriebszustand des Kaffeevollautomaten und in Fallrichtung der Bohnen betrachtet, unterhalb des Bohnenbehälters befindet und eine dem Mahlwerk nachgeordnete Brüheinheit sowie eine Ausgabeeinrichtung zur Abgabe des in dem Kaffeevollautomaten zubereiteten Getränks. Der Erfindung stellt sich das Problem, einen Kaffeevollautomaten bereitzustellen, der baulich stark vereinfacht und kompakt ausgeführt ist.

Erfindungsgemäß wird dieses Problem durch einen Kaffeevollautomaten mit den Merkmalen der unabhängigen Patentansprüche 1 und 8 gelöst.
Vorteilhafte Ausgestaltungen und Weiterbildungen der Erfindung ergeben sich aus den nachfolgenden Unteransprüchen.

Ein Kaffeevollautomat mit einem Innenraum, umfassend einen Bohnenbehälter in dem Innenraum, ein Mahlwerk, das sich im Betriebszustand des Kaffeevollautomaten und in Fallrichtung der Bohnen betrachtet, unterhalb des Bohnenbehälters befindet und eine dem Mahlwerk nachgeordnete Brüheinheit sowie wenigstens eine Ausgabeeinrichtung zur Abgabe des in dem Kaffeevollautomaten zubereiteten Getränks, wurde erfindungsgemäß dahingehend weitergebildet, dass der Bohnenbehälter mittels eines entlang einer Führungsbahn bewegbaren Zuführschlittens in den Innenraum einsetzbar ist, der einen den Bohnenbehälter aufnehmenden Bohnenbehälterschlitten aufweist und der Bohnenbehälterschlitten entlang mindestens einer Bewegungsbahn des Zuführschlittens relativ zu dem Zuführschlitten bewegbar ist.

Die erfindungsgemäße Besonderheit ist darin zu sehen, dass durch die Integration der Ausgabeeinrichtung in den Innenraum des Kaffeevollautomaten und des damit einhergehenden Erfordernisses, den Bohnenbehälter oberhalb des Malwerkes anzuordnen, der Bohnenbehälter in einer räumlichen Anordnung hinter der Ausgabeeinrichtung vorgesehen wird. Dies führt zu der angegebenen Lösung, den Bohnenbehälter auf einem gesonderten Bohnenbehälterschlitten anzuordnen, wobei der Bohnenbehälterschlitten relativ zu einem Zuführschlitten bewegbar ausgeführt und mit diesem gekoppelt ist. Zur Anordnung des Bohnenbehälterschlittens an seiner vorgesehenen Position innerhalb des Kaffeevollautomaten wird demnach zunächst der Führungsschlitten mit dem darauf in seiner ursprünglichen Lage angeordneten Bohnenbehälterschlitten in wenigstens eine geeignete Führungsbahn des Innenraumes eingesetzt und entlang der Führungsbahn in den Innenraum hinein bewegt. Nach Erreichen einer definierten Position des Führungsschlittens setzt die Relativbewegung des Bohnenbehälterschlittens ein, so dass dieser zwangsläufig in die für ihn vorgesehene Position oberhalb des Malwerkes verbracht wird. Die Führungsbahn des Führungsschlittens beziehungsweise die Bewegungsbahn des Bohnenbehälterschlittens können dabei einen geradlinigen oder bogenförmigen Verlauf aufweisen. Durch die erfindungsgemäßen Maßnahmen kann der Bohnenbehälter außerhalb des Kaffeevollautomaten mit frischem Kaffeebohnen befüllt oder beispielsweise auch gereinigt werden, um ihn anschließend in seine vorgegebene Position im Innenraum des Kaffeevollautomaten einzusetzen. Die somit gebildete Führungsmechanik bildet dabei eine sehr einfache Lösung, die es ermöglicht, den erfindungsgemäßen Kaffeevollautomaten kompakt auszuführen und baulich verhältnismäßig einfach zu gestalten.

Wie eingangs bereits ausgeführt wurde, ist es von besonderem Vorteil, wenn die Bewegungsbahn, entlang derer der Bohnenbehälterschlitten bewegbar ist, eine andere Orientierung aufweist, als die Führungsbahn des Zuführschlittens. Anders ausgedrückt wird eine Relativbewegung zwischen Bohnenbehälterschlitten und Zuführschlitten erreicht, indem die Bewegungsrichtungen voneinander abweichen. Dies ermöglicht die Zuführung des Bohnenbehälters auch in Bereiche des Innenraumes des Kaffeevollautomaten, an denen er bislang nicht angeordnet werden konnte, woraus sich die vorteilhafte, sehr kompakte Bauweise des vorliegenden Kaffeevollautomaten ergibt.

Konkrete Weiterbildungen des zuvor beschriebenen Erfindungsgedankens sind darüber hinaus darin zu sehen, dass die Führungsbahn des Zuführschlittens oder die Bewegungsbahn des Bohnenbehälterschlittens einen geradlinigen oder bogenförmigen Verlauf aufweist oder die Führungsbahn des Zuführschlittens und die Bewegungsbahn des Bohnenbehälterschlittens einen geradlinigen oder bogenförmigen Verlauf aufweisen. Beliebige Kombinationen der Ausrichtung der Führungsbahn beziehungsweise der Bewegungsbahn sind demnach im Sinne der Erfindung möglich, was zu einer sehr breiten Variantenvielfalt bei der Gestaltung und Anordnung des Bohnenbehälters innerhalb des Innenraumes des Kaffeevollautomaten führt.

Eine andere vorteilhafte Ausgestaltung besteht darüber hinaus darin, dass der Zuführschlitten und der Bohnenbehälterschlitten über ein Bewegungsübertragungsgetriebe miteinander gekoppelt sind. Als Bewegungsübertragungsgetriebe kann dabei zunächst grundsätzlich jede Art einer Mechanik verstanden werden, die geeignet ist, die eingangs erwähnte Zwangsbewegung des Bohnenbehälterschlittens in Relation zum Führungsschlitten umzusetzen. Nur beispielhaft seien an dieser Stelle Übertragungsmittel aus Riemen, Bändern oder Federn erwähnt.

Das Bewegungsübertragungsgetriebe kann in bevorzugter Weise aus mindestens einer Zahnstange am Zuführschlitten und wenigstens einem, mit mindestens einer Zahnstange des Bohnenbehälterschlittens gekoppelten Zahnrad bestehen, sodass dadurch eine Bewegungskopplung zwischen Zuführschlitten und Bohnenbehälterschlitten gegeben ist. durch die Zahnräder wird ein Bewegungsübertragungsgetriebe gebildet, dessen Aufbau einfach gestaltet ist und dennoch die eingangs erwähnte Relativbewegung zwischen Bohnenbehälterschlitten und Führungsschlitten entlang definierter Bahnen gewährleistet.

Eine sehr vorteilhafte Ausführungsvariante zur Bewegung des Zuführschlittens und/oder des Bohnenbehälterschlittens ist ferner darin zu sehen, dass wenigstens ein elektrischer Antrieb vorhanden ist, mittels dessen zumindest der Zuführschlitten automatisch in seine Endlage innerhalb des Innenraumes des Kaffeevollautomaten bewegt wird. Um einen möglichst hohen Automatisierungsgrad zu erreichen, ist es natürlich im Sinne der Erfindung, wenn sowohl der Zuführschlitten, als auch der Bohnenbehälterschlitten über mindestens einen Elektromotor bewegt werden, bei dem es sich beispielsweise um einen Schrittmotor handeln kann. Auch hierbei besteht natürlich die Möglichkeit, die vom Elektromotor erzeugte Drehbewegung mittels eines Bewegungsübertragungsgetriebes auf eine sinnfällige Geschwindigkeit zu bringen. Ferner können Sensoren, wie Näherungssensoren, vorgesehen werden, um beispielsweise nach einer definierten Bewegung des Zuführschlittens automatisch die Bewegung des Bohnenbehälterschlittens einzuleiten.

Der Einsatz eines Bewegungsübertragungsgetriebes gestattet zudem eine weitere, sehr vorteilhafte und insbesondere aus fertigungstechnischen Aspekten sinnvolle Vereinfachung des erfindungsgemäßen Kaffeevollautomaten, die darin besteht, dass zumindest die Bestandteile des Bewegungsübertragungsgetriebes aus Kunststoff gefertigt sind. Kunststoffe sind heutzutage sehr langlebig und stabil, so dass die Gestaltung des Bewegungsübertragungsgetriebes keinem übermäßigen Verschleiß unterliegt und zudem der Vorteil erreicht wird, das insgesamt Gewicht eingespart werden kann. Bei Verwendung selbst schmierender Kunststoffe wird zudem der Verschleiß noch zusätzlich reduziert.

Eine weitere, alternative Lösung für einen Kaffeevollautomaten mit einem Innenraum, umfassend einen Bohnenbehälter in dem Innenraum, ein Mahlwerk, das sich im Betriebszustand des Kaffeevollautomaten und in Fallrichtung der Bohnen betrachtet, unterhalb des Bohnenbehälters befindet, der eine dem Mahlwerk nachgeordnete Brüheinheit sowie wenigstens eine Ausgabeeinrichtung zur Abgabe des in dem Kaffeevollautomaten zubereiteten Getränks aufweist, wurde erfindungsgemäß dahingehend weiter entwickelt, dass der auf einem Bohnenbehälterschlitten angeordnete Bohnenbehälter entlang mindestens einer Führung bewegbar in den Innenraum einsetzbar ist, wobei die Führung eine sich in Bewegungsrichtung des Bohnenbehälters ändernde Ausrichtung aufweist.

Mit dieser Ausführung ist es gelungen, eine besonders einfache Variante für die Einführung des Bohnenbehälters in den Innenraum des Kaffeevollautomaten zu schaffen. Hierbei wird lediglich eine Führung erforderlich, entlang derer der Bohnenbehälter auf seinem Bohnenbehälterschlitten bewegt wird. Die Fertigung der Führung innerhalb des Innenraumes des Kaffeevollautomaten kann dabei in sinnfälliger Weise aus Kunststoff erfolgen, was die Herstellung insgesamt vereinfacht und die Kosten reduziert. Zudem haben Kunststoffe den Vorteil, dass sie zum Teil selbstschmierende Eigenschaften aufweisen und dadurch der Wartungsaufwand der gesamten Mechaniken erheblich reduziert wird.

Dabei weist gemäß einer ersten Ausgestaltung dieses Lösungsvorschlages die Führung einen kreisbogenförmigen Verlauf auf. Der kreisbogenförmige Verlauf stellt eine besonders einfache Ausführung dar, weil er einfach zu fertigen ist und das Einsetzen sowie die Bewegung des Bohnenbehälterschlittens in erheblichem Maße erleichtert.

Wie zuvor bereits erwähnt wurde, ist es von Vorteil, wenn die Führung aus einem Kunststoff hergestellt ist. Korrespondierend hierzu geht eine Ausgestaltung der Erfindung dahin, dass beispielsweise zumindest auch der Zuführschlitten, der Bohnenbehälterschlitten und der Bohnenbehälter aus Kunststoff gefertigt sind. Diese Maßnahmen tragen zusätzlich dazu bei, den Kaffeevollautomaten insgesamt kompakter und einfacher ausführen zu können, ohne dabei Qualitätseinbußen hinnehmen zu müssen.

Auch bezüglich des Bohnenbehälterschlittens ist es von maßgeblichem Vorteil, wenn wenigstens ein elektrischer Antrieb vorhanden ist, mittels dessen zumindest der Bohnenbehälterschlitten automatisch in seine Endlage innerhalb des Innenraumes des Kaffeevollautomaten bewegt wird. Anders ausgedrückt wird der Bohnenbehälterschlitten zum Einsetzen des Bohnenbehälters in den Innenraum des Kaffeevollautomaten vom Anwender lediglich am Anfang der Führung angesetzt. Hieran schließt sich der Eingriff und Einsatz des elektrischen Antriebs an, der den restlichen Teil der Bewegung des Bohnenbehälterschlittens innerhalb der Führung umsetzt und dadurch den Bohnenbehälter automatisch in seine Endlage verbringt und dort positioniert.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: einen räumlichen Blick in den Innenraum einer ersten Ausführungsvariante eines Kaffeevollautomaten bei abgenommener Tür,
- Figur 2:: einen Blick in den Innenraum des Kaffeevollautomaten in einer ersten Position des Zuführschlittens und des Bohnenbehälterschlittens,
- Figur 3:: einen Blick in den Innenraum des Kaffeevollautomaten in einer teilweise eingeschobenen Position des Zuführschlittens,
- Figur 4:: einen Blick in den Innenraum des Kaffeevollautomaten in einer vollständig eingeschobenen Position des Zuführschlittens und des Bohnenbehälterschlittens,
- Figur 5:: einen Blick in den Innenraum einer speziellen Ausführungsvariante des Kaffeevollautomaten mit einer Führung zur Bewegung des Bohnenbehälterschlittens.

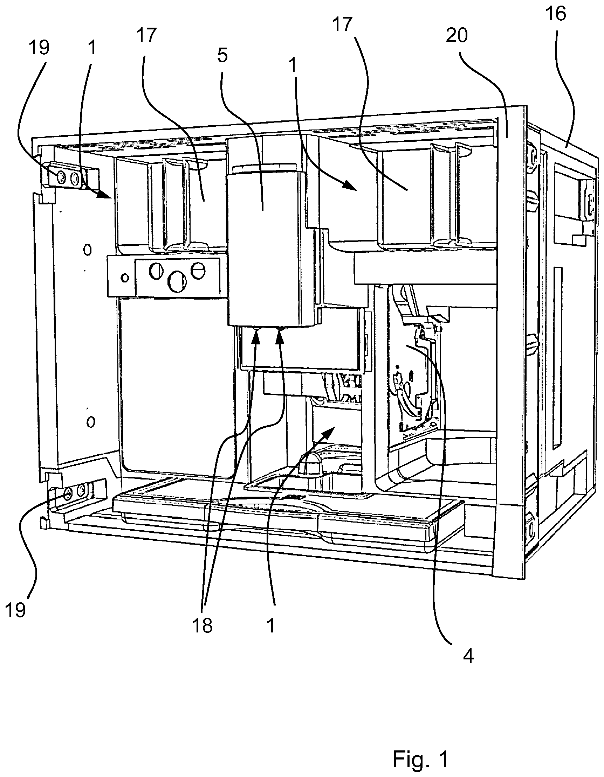

Aus der Figur 1 geht ein räumlicher Blick in den Innenraum 1 einer ersten Ausführung eines Kaffeevollautomaten bei abgenommener Tür hervor. Der Innenraum 1 ist dabei von einem Gehäuse 16 begrenzt, das zudem sämtliche Bauteile des Kaffeevollautomaten in sinnfälliger Weise aufnimmt. Im frontseitigen Bereich verfügt der gezeigte Kaffeevollautomat über eine Blende 20, die die dahinter liegenden Bauelemente optisch ansprechend abdeckt. Im linken Bildteil der Figur 1 sind insgesamt zwei Türscharniere 19 erkennbar, die der Befestigung einer nicht dargestellten Tür dienen. Die Türscharniere 19 können bei dem gezeigten Kaffeevollautomaten verhältnismäßig klein dimensioniert werden, da hierbei der wesentliche Vorteil der Integration der Ausgabeeinrichtung 5 in den Innenraum 1 erreicht werden konnte. Dies führt dazu, dass der Bohnenbehälter 2, welcher in der Figur 1 nicht erkennbar ist, mittels eines Griffes 17 in den Innenraum 1 des Kaffeevollautomaten eingeführt werden kann und in diesem Fall hinter der Ausgabeeinrichtung 5 und oberhalb des Mahlwerkes 3 angeordnet ist. Zum Einführen des Bohnenbehälters 2 in den Innenraum 1 ist der Bohnenbehälter 2 auf einem in der Figur 1 ebenfalls nicht erkennbaren Bohnenbehälterschlitten 8 angeordnet, der seinerseits relativ bewegbaren von einem Zuführschlitten 7 aufgenommen ist. Unterhalb des Mahlwerkes 3 befindet sich im Betriebszustand des Kaffeevollautomaten und in Fallrichtung der Bohnen betrachtet, die Brüheinheit 4, in der das gemahlene Kaffeepulver mit kochenden Wasser zusammengeführt wird, um dadurch ein Kaffeegetränk aufzubrühen. Das auf diese Weise erzeugte Kaffeegetränk kann anschließend über die Ausgabeeinrichtung 5 entnommen werden, wobei hierfür unterhalb der Ausgabeeinrichtung 5 mehrere Ausgabedüsen 18 vorhanden sind. Über die Ausgabedüsen 18 besteht in an sich bekannter Weise auch die Möglichkeit, beispielsweise Wasserdampf, Milchschaum oder erwärmte Milch mit dem erzeugten Kaffeegetränk zusammenzuführen.

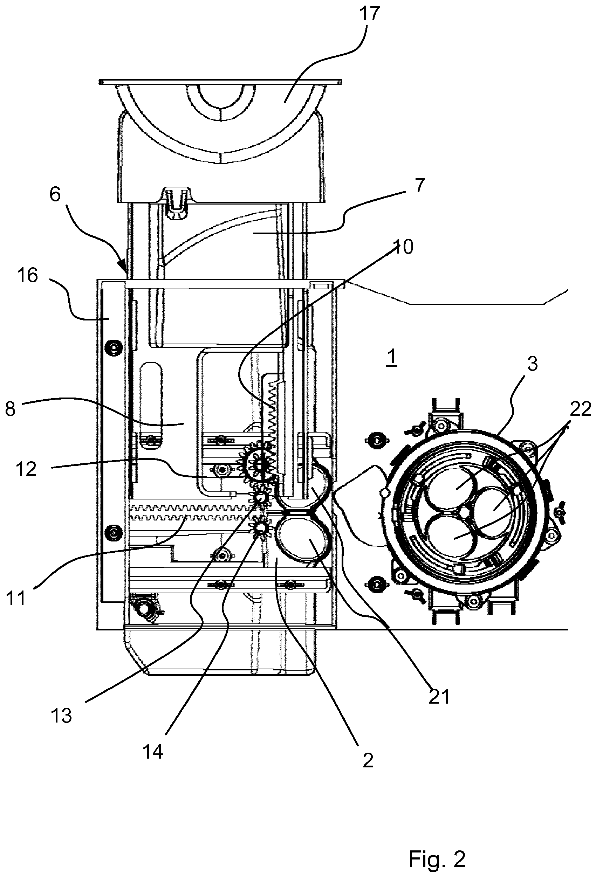

Die Figur 2 erlaubt einen Blick in den Innenraum 1 des Kaffeevollautomaten in einer ersten Position des Zuführschlittens 7 und des Bohnenbehälterschlittens 8. In dieser Phase wurde der Zuführschlitten 7 mit Hilfe des Griffes 17 bereits in eine in dem Gehäuse 16 vorhandene Führungsbahn 6 eingeführt, so dass die Möglichkeit besteht, den Zuführschlitten 7 zusammen mit dem darauf angeordneten, noch nicht seitwärts bewegten Bohnenbehälterschlitten 8 und dem auf dem Bohnenbehälterschlitten 8 vorhandenen Bohnenbehälter 2 in den Innenraum 1 des Kaffeevollautomaten einzuführen. Durch die räumliche Schnittdarstellung in Figur 2 sind darüber hinaus die unteren Öffnungen 21 des Bohnenbehälters 2 lediglich in angeschnittener Form erkennbar. Das Mahlwerk 3 ist im rechten, unteren Bildteil der Figur 2 zu sehen und hierbei ebenfalls in einem räumlichen Schnitt gezeigt, der den Blick auf insgesamt drei Auslässe 22 ermöglicht, über die das in dem Mahlwerk 3 erzeugte Kaffeepulver in die darunter befindliche Brüheinheit 4 überführt werden kann. Zwischen dem Zuführschlitten 7 und dem Bohnenbehälterschlitten 8 ist ferner ein Bewegungsübertragungsgetriebe vorhanden, welches im vorliegenden Fall aus einer Kombination von mehreren Zahnrädern 12, 13, 14 und Zahnstangen 10, 11 besteht. Der Zuführschlitten 7 weist in diesem Fall einseitig eine Zahnstange 10 auf, deren Zähne mit einem ersten Zahnrad 12 kämmen, dass eine Kombination aus einem in der Figur 2 oberen, kleinen Zahnrad mit wenigen Zähnen und einem großen Zahnrad mit einer höheren Anzahl Zähne bildet. Der Eingriff zwischen Zahnstange 10 und Zahnrad 12 erfolgt im Bereich des oberen, kleineren Zahnradteils des Zahnrades 12. Durch die während der Einschubbewegung des Zuführschlittens 7 in die Führungsbahn 6 eingeleitete und über die Zahnstange 10 auf das Zahnrad 12 übertragene Bewegung wird das Zahnrad 12 in eine Rotation in Uhrzeigerrichtung versetzt. Der untere, größere Teil des Zahnrades 12 kämmt dabei mit einem weiteren Zahnrad 13 und einem Zahnrad 14 die dadurch in eine Bewegung entgegen der Uhrzeigerrichtung versetzt werden. Die Zahnräder 13, 14 kämmen ihrerseits mit einer am Bohnenbehälterschlitten 8 vorhandenen Zahnstange 11, die folglich eine rechtwinklig zur Führungsbahn 6 des Zuführschlittens 7 verlaufende Bewegung des Bohnenbehälterschlittens 8 mit dem darauf angeordneten Bohnenbehälter 2 bewirken. Hierbei handelt es sich durch das vorhandene Bewegungsübertragungsgetriebe um eine Zwangskopplung zwischen dem Zuführschlitten 7 und dem Bohnenbehälterschlitten 8, die folglich relativ zueinander und in unterschiedlichen Richtungen sowie in einer vordefinierten Reihenfolge bewegt werden.

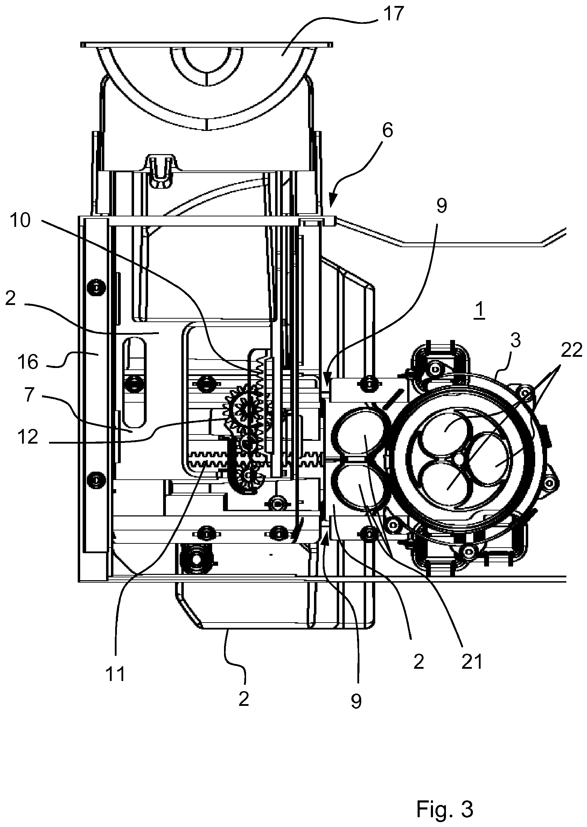

Bei Betrachtung der Figur 3 fällt auf, dass diese einen weiteren Blick in den Innenraum 1 des Kaffeevollautomaten in einer teilweise eingeschobenen Position des Zuführschlittens 7 darstellt. Hierbei ist durch die Bewegung des Zuführschlittens 7 entlang der Führungsbahn 6 in den Innenraum 1 der Bohnenbehälterschlitten 8 bereits teilweise in seitlicher Richtung auf das Mahlwerk 3 zu bewegt worden. Deutlich wird dies beispielsweise durch die Annäherung der im Schnitt gezeigten Öffnungen 21 des Bohnenbehälters 2 an das Mahlwerk 3. Die Zahnstange 11 des Bohnenbehälterschlittens 8 ist hierbei bereits etwa um die Hälfte ihres möglichen Weges bewegt worden. Dabei wurde und wird der Bohnenbehälterschlitten 8 entlang der Bewegungsbahn 9 verschoben, wobei die Bewegungsbahn 9 im vorliegenden Fall rechtwinklig zu der Führungsbahn 6 des Zuführschlittens 7 verläuft.

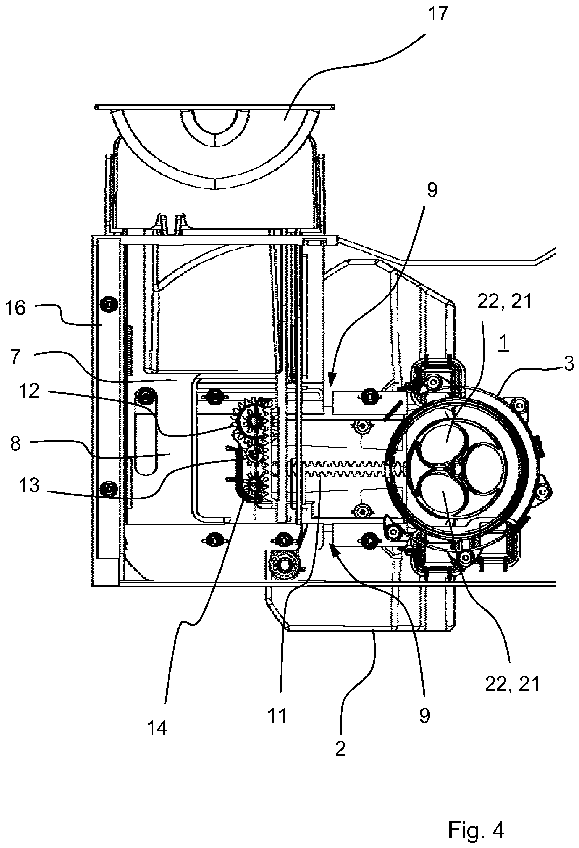

In der Darstellung der Figur 4 befindet sich der Zuführschlitten 7 in einer mittels des Griffes 17 vollständig in den Innenraum 1 des Kaffeevollautomaten eingeführten Position, so dass das Endstück des Griffes 17 etwa an der Oberfläche des Gehäuses 16 zur Anlage kommt. Der Bohnenbehälterschlitten 8 wurde in dieser Stellung um seinen maximalen Betrag rechtwinklig zum Zuführschlitten 7 bewegt, was durch das Bewegungsübertragungsgetriebe ermöglicht wird. Bei Betrachtung der Figur 4 fällt dabei auf, dass die Zahnstange 11 in dieser Position vollständig um den gesamten Betrag ihres möglichen Bewegungsweges seitwärts verschoben wurde und nur noch mit ihrem Ende mit den Zahnrädern 13 und 14 in Eingriff steht. Der Bohnenbehälter 2 mit seinen Öffnungen 21 befindet sich in dieser Position unmittelbar oberhalb des Mahlwerks 3, so dass die Öffnungen 21 des Bohnenbehälters 2 und die unteren Auslässe 22 des Mahlwerks 3 in Überdeckung stehen.

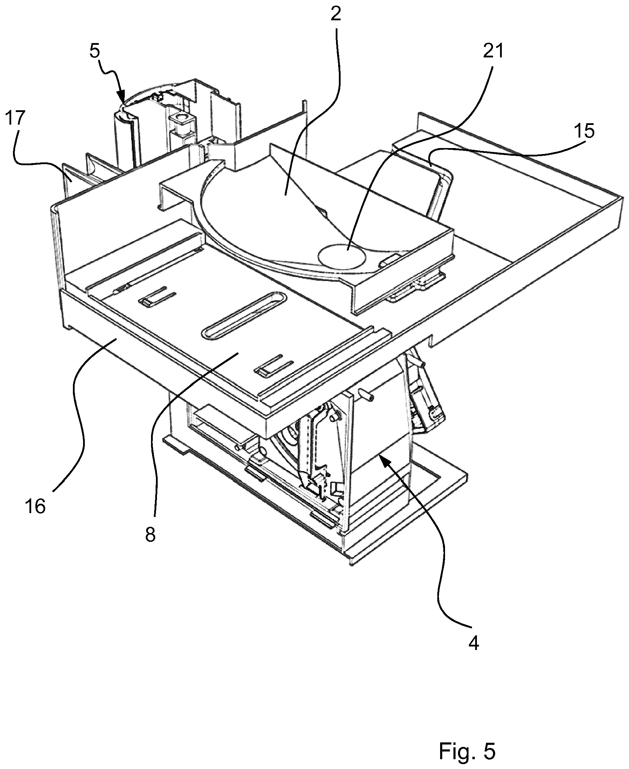

Aus der Figur 5 geht ein Blick in den Innenraum 1 einer speziellen Ausführungsvariante des Kaffeevollautomaten mit einer Führung 15 zur Bewegung des Bohnenbehälterschlittens 8 hervor. Bei dieser speziellen Bauweise kann auf den Einsatz eines Zuführschlittens 7 vollständig verzichtet werden. Vielmehr ist in das Gehäuse 16 unmittelbar die erwähnte Führung 15 eingearbeitet. Die Führung 15 weist im vorliegenden Fall eine bogenförmige Gestalt auf, so dass der Bohnenbehälterschlitten 8 mit dem darauf befindlichen Bohnenbehälter 2, der im vorliegenden Fall nur eine Kammer aufweist, im frontseitigen Bereich des Kaffeevollautomaten an der Führung 15 eingesetzt wird und anschließend entlang der Führung 15 hinter die Ausgabeeinrichtung 5 verschoben werden kann. Dabei kann zumindest der Teil des Gehäuses 16, welcher die Führung 15 aufweist, der Bohnenbehälter 2 und der Bohnenbehälterschlitten 8 bevorzugt aus Kunststoff hergestellt sein. Dies hat den Vorteil, dass beispielsweise bei Verwendung selbst schmierender Kunststoffe die Bewegung des Bohnenbehälterschlittens 8 innerhalb der Führung 15 verschleißfrei und leichtgängig ist. Zudem lassen sich auf diese Weise zahlreiche Bauteile einfach und fertigungstechnisch optimal herstellen.

### BEZUGSZEICHENLISTE:

- 1: Innenraum
- 2: Bohnenbehälter
- 3: Mahlwerk
- 4: Brüheinheit
- 5: Ausgabeeinrichtung
- 6: Führungsbahn
- 7: Zuführschlitten
- 8: Bohnenbehälterschlitten
- 9: Bewegungsbahn
- 10: Zahnstange
- 11: Zahnstange
- 12: Zahnrad
- 13: Zahnrad
- 14: Zahnrad
- 15: Führung
- 16: Gehäuse
- 17: Griff
- 18: Ausgabedüsen
- 19: Türscharnier
- 20: Blende
- 21: Öffnung des Bohnenbehälters
- 22: Auslass des Mahlwerks

## Patentansprüche

1. Kaffeevollautomat mit einem Innenraum (1), umfassend einen Bohnenbehälter (2) in dem Innenraum (1), ein Mahlwerk (3), das sich im Betriebszustand des Kaffeevollautomaten und in Fallrichtung der Bohnen betrachtet, unterhalb des Bohnenbehälters (2) befindet und eine dem Mahlwerk (3) nachgeordnete Brüheinheit (4) sowie wenigstens eine Ausgabeeinrichtung (5) zur Abgabe des in dem Kaffeevollautomaten zubereiteten Getränks,
**dadurch gekennzeichnet, dass**
der Bohnenbehälter (2) mittels eines entlang einer Führungsbahn (6) bewegbaren Zuführschlittens (7) in den Innenraum (1) einsetzbar ist, der einen den Bohnenbehälter (2) aufnehmenden Bohnenbehälterschlitten (8) aufweist und der Bohnenbehälterschlitten (8) entlang mindestens einer Bewegungsbahn (9) des Zuführschlittens (7) relativ zu dem Zuführschlitten (7) bewegbar ist.

2. Kaffeevollautomat nach Anspruch 1,
**dadurch gekennzeichnet, dass**
die Bewegungsbahn (9), entlang derer der Bohnenbehälterschlitten (8) bewegbar ist, eine andere Orientierung aufweist, als die Führungsbahn (6) des Zuführschlittens (7).

3. Kaffeevollautomat nach einem der vorstehend genannten Ansprüche,
**dadurch gekennzeichnet, dass**
die Führungsbahn (6) des Zuführschlittens (7) oder die Bewegungsbahn (9) des Bohnenbehälterschlittens (8) einen geradlinigen oder bogenförmigen Verlauf aufweist oder die Führungsbahn (6) des Zuführschlittens (7) und die Bewegungsbahn (9) des Bohnenbehälterschlittens (8) einen geradlinigen oder bogenförmigen Verlauf aufweisen.

4. Kaffeevollautomat nach einem der vorstehend genannten Ansprüche,
**dadurch gekennzeichnet, dass**
der Zuführschlitten (7) und der Bohnenbehälterschlitten (8) über ein Bewegungsübertragungsgetriebe miteinander gekoppelt sind.

5. Kaffeevollautomat nach Anspruch 4,
**dadurch gekennzeichnet, dass**
das Bewegungsübertragungsgetriebe aus mindestens einer Zahnstange (10) am Zuführschlitten (7) und wenigstens einem, mit mindestens einer Zahnstange (11) des Bohnenbehälterschlittens (8) gekoppelten Zahnrad (12, 13, 14) besteht, sodass dadurch eine Bewegungskopplung zwischen Zuführschlitten (7) und Bohnenbehälterschlitten (8) gegeben ist.

6. Kaffeevollautomat nach einem der vorstehend genannten Ansprüche,
**dadurch gekennzeichnet, dass**
wenigstens ein elektrischer Antrieb vorhanden ist, mittels dessen zumindest der Zuführschlitten (7) automatisch in seine Endlage innerhalb des Innenraumes (1) des Kaffeevollautomaten bewegt wird.

7. Kaffeevollautomat nach einem der Ansprüche 4 bis 6,
**dadurch gekennzeichnet, dass**
zumindest die Bestandteile des Bewegungsübertragungsgetriebes aus Kunststoff gefertigt sind.

8. Kaffeevollautomat mit einem Innenraum (1), umfassend einen Bohnenbehälter (2) in dem Innenraum (1), ein Mahlwerk (3), das sich im Betriebszustand des Kaffeevollautomaten und in Fallrichtung der Bohnen betrachtet, unterhalb des Bohnenbehälters (2) befindet und eine dem Mahlwerk (3) nachgeordnete Brüheinheit (4) sowie wenigstens eine Ausgabeeinrichtung (5) zur Abgabe des in dem Kaffeevollautomaten zubereiteten Getränks,
**dadurch gekennzeichnet, dass**
der auf einem Bohnenbehälterschlitten (8) angeordnete Bohnenbehälter (2) entlang mindestens einer Führung (15) bewegbar in den Innenraum (1) einsetzbar ist, wobei die Führung (15) eine sich in Bewegungsrichtung des Bohnenbehälters (2) ändernde Ausrichtung aufweist.

9. Kaffeevollautomat nach Anspruch 8,
**dadurch gekennzeichnet, dass**
die Führung (15) einen kreisbogenförmigen Verlauf aufweist.

10. Kaffeevollautomat nach einem der vorstehend genannten Ansprüche,
**dadurch gekennzeichnet, dass**
zumindest der Zuführschlitten (7), der Bohnenbehälterschlitten (8) und der Bohnenbehälter (2) aus Kunststoff gefertigt sind.

11. Kaffeevollautomat nach einem der vorstehend genannten Ansprüche,
**dadurch gekennzeichnet, dass**
wenigstens ein elektrischer Antrieb vorhanden ist, mittels dessen zumindest der Bohnenbehälterschlitten (8) automatisch in seine Endlage innerhalb des Innenraumes (1) des Kaffeevollautomaten bewegt wird.

## Claims

1. Fully automatic coffee machine having an interior space (1), comprising a bean container (2) in the interior space (1), a grinder (3) which, when the fully automatic coffee machine is in operation and viewed in the falling direction of the beans, is located below the bean container (2), a brewing unit (4) arranged downstream of the grinder (3), and at least one outlet means (5) for dispensing the beverage prepared in the fully automatic coffee machine, **characterised in that** the bean container (2) can be inserted by means of a feed slide (7) which is moveable along a guide track (6) into the interior space (1), which has a bean container slide (8) that receives the bean container (2), and the bean container slide (8) can be moved relative to the feed slide (7) along at least one movement track (9) of the feed slide (7).

2. Fully automatic coffee machine according to claim 1, **characterised in that** the movement track (9) along which the bean container slide (8) can be moved has a different orientation to the guide track (6) of the feed slide (7).

3. Fully automatic coffee machine according to either of the preceding claims, **characterised in that** the guide track (6) of the feed slide (7) or the movement track (9) of the bean container slide (8) has a straight or curved path, or the guide track (6) of the feed slide (7) and the movement track (9) of the bean container slide (8) has a straight or curved path.

4. Fully automatic coffee machine according to any of the preceding claims, **characterised in that** the feed slide (7) and the bean container slide (8) are coupled to one another by means of a motion-transmission mechanism.

5. Fully automatic coffee machine according to claim 4, **characterised in that** the motion-transmission mechanism consists of at least one gear rack (10) on the feed slide (7) and at least one gear wheel (12, 13, 14) coupled to at least one gear rack (11) of the bean container slide (8), resulting in motion coupling between the feed slide (7) and the bean container slide (8).

6. Fully automatic coffee machine according to any of the preceding claims, **characterised in that** at least one electric drive is provided, by means of which at least the feed slide (7) is automatically moved into its end position inside the interior space (1) of the fully automatic coffee machine.

7. Fully automatic coffee machine according to any of claims 4 to 6, **characterised in that** at least the components of the motion-transmission mechanism are made of plastics material.

8. Fully automatic coffee machine having an interior space (1), comprising a bean container (2) in the interior space (1), a grinder (3) which, when the fully automatic coffee machine is in operation and viewed in the falling direction of the beans, is located below the bean container (2), a brewing unit (4) arranged downstream of the grinder (3), and at least one outlet means (5) for dispensing the beverage prepared in the fully automatic coffee machine, **characterised in that** the bean container (2) arranged on a bean container slide (8) can be inserted into the interior space (1) so as to be movable along at least one guide (15), the guide (15) having a varying orientation in the movement direction of the bean container (2).

9. Fully automatic coffee machine according to claim 8, **characterised in that** the guide (15) has an arcuate path.

10. Fully automatic coffee machine according to any of the preceding claims, **characterised in that** at least the feed slide (7), the bean container slide (8) and the bean container (2) are made of plastics material.

11. Fully automatic coffee machine according to any of the preceding claims, **characterised in that** at least one electric drive is provided, by means of which at least the feed slide (8) is automatically moved into its end position inside the interior space (1) of the fully automatic coffee machine.

## Revendications

1. Machine à café totalement automatique avec une partie intérieure (1), comprenant un récipient à grains (2) dans la partie intérieure (1), un moulin (3), qui se situe en dessous du récipient à grains (2) dans l'état de fonctionnement de la machine à café totalement automatique, vu dans la direction de chute des grains, et une unité d'infusion (4) disposée après le moulin (3), ainsi qu'au moins un dispositif de sortie (5) pour la distribution de la boisson préparée dans la machine à café totalement automatique, **caractérisée en ce que** le récipient à grains (2) peut être inséré dans la partie intérieure (1), qui présente un chariot de récipient à grains (8) réceptionnant le récipient à grains (2), au moyen d'un chariot d'alimentation (7) mobile le long d'une voie de guidage (6), et le chariot de récipient à grains (8) est mobile par rapport au chariot d'alimentation (7) le long d'au moins une voie de déplacement (9) du chariot d'alimentation (7).

2. Machine à café totalement automatique selon la revendication 1, **caractérisée en ce que** la voie de déplacement (9), le long de laquelle le chariot de récipient à grains (8) est mobile, présente une autre orientation que la voie de guidage (6) du chariot d'alimentation (7).

3. Machine à café totalement automatique selon l'une des revendications précédemment citées, **caractérisée en ce que** la voie de guidage (6) du chariot d'alimentation (7), ou la voie de déplacement (9) du chariot de récipient à grains (8), présente un parcours en forme de ligne droite ou de courbe, ou que la voie de guidage (6) du chariot d'alimentation (7) et la voie de déplacement (9) du chariot de récipient à grains (8) présentent un parcours en ligne droite ou en forme de courbe.

4. Machine à café totalement automatique selon l'une des revendications précédemment citées, **caractérisée en ce que** le chariot d'alimentation (7) et le chariot de récipient à grains (8) sont accouplés par l'intermédiaire d'un dispositif de transmission de mouvement.

5. Machine à café totalement automatique selon la revendication 4, **caractérisée en ce que** le dispositif de transmission de mouvement est constitué d'au moins une crémaillère (10) sur le chariot d'alimentation (7) et d'au moins une roue dentée (12, 13, 14) couplée avec au moins une crémaillère (11) du chariot du récipient à grains (8), de sorte qu'un couplage de déplacement est réalisé entre le chariot d'alimentation (7) et le chariot du récipient à grains (8).

6. Machine à café totalement automatique selon l'une des revendications précédemment citées, **caractérisée en ce qu'**il y a au moins un système d'entraînement électrique au moyen duquel le chariot d'alimentation (7) est déplacé automatiquement dans sa position finale à l'intérieur de la partie intérieure (1) de la machine à café totalement automatique.

7. Machine à café totalement automatique selon l'une des revendications 4 à 6, **caractérisée en ce qu'**au moins les composants du dispositif de transmission de mouvement sont fabriqués en matière plastique.

8. Machine à café totalement automatique avec une partie intérieure (1), comprenant un récipient à grains (2) dans la partie intérieure (1), un moulin (3), qui se situe en dessous du récipient à grains (2) à l'état de fonctionnement de la machine à café totalement automatique, vu dans la direction de chute des grains, et une unité d'infusion (4) disposée après le moulin (3), ainsi qu'au moins un dispositif de sortie (5) pour la distribution de la boisson préparée dans la machine à café totalement automatique, **caractérisée en ce que** le récipient à grains (2) disposé sur un chariot de récipient à grains (8) peut être inséré dans la partie intérieure (1) mobile le long d'au moins un système de guidage (15), le système de guidage (15) présentant une orientation se modifiant dans la direction de déplacement du récipient à grains (2).

9. Machine à café totalement automatique selon la revendication 8, **caractérisée en ce que** le système de guidage (15) présente un parcours en forme d'arc de cercle.

10. Machine à café totalement automatique selon l'une des revendications précédemment citées, **caractérisée en ce qu'**au moins le chariot d'alimentation (7), le chariot du récipient à grains (8) et le récipient à grains (2) sont fabriqués en matière plastique.

11. Machine à café totalement automatique selon l'une des revendications précédemment citées, **caractérisée en ce qu'**il y a au moins un entraînement électrique au moyen duquel au moins le chariot du récipient à grains (8) est déplacé automatiquement dans sa position finale à l'intérieur de la partie intérieure (1) de la machine à café totalement automatique.
